# EUROPÄISCHE PATENTSCHRIFT

(11) **EP 3 139 238 B1**
(45) Veröffentlichungstag und Bekanntmachung des Hinweises auf die Patenterteilung: **23.09.2020**
(21) Anmeldenummer: 16020304.8
(22) Anmeldetag: 12.08.2016
(51) Int. Cl.: G05D 1/06

(54) **VERFAHREN ZUR ZIELANFLUGSTEUERUNG VON UNBEMANNTEN FLUGOBJEKTEN**
METHOD FOR CONTROLLING THE APPROACH FLIGHT TOWARDS TARGETS BY UNMANNED AERIAL VEHICLES
PROCÉDÉ DE COMMANDE DE VOL D'APPROCHE DE CIBLE D'OBJETS VOLANTS SANS PILOTE

(30) Priorität: 22.08.2015 DE 102015011033; 10.10.2015 DE 102015013104
(43) Veröffentlichungstag der Anmeldung: 08.03.2017
(73) Patentinhaber: Wessler, Olaf, 56076 Koblenz (DE)
(72) Erfinder: WESSLER, Olaf, 56076 Koblenz (DE); REUTER, Dania Lieselotte, 56179 Vallendar (DE)

(56) Entgegenhaltungen:
- DE-A1-102010 051 561
- US-A1- 2015 120 094
- US-B1- 8 948 935

## Beschreibung

Die vorliegende Erfindung betrifft ein Verfahren zur Zielanflugsteuerung von unbemannten Flugobjekten, insbesondere Lieferdrohnen. Es gibt bereits vielfach Überlegungen die sogenannte letzte Meile der Auslieferung von Einzelhandels- und Expresswaren durch autonom fliegende unbemannte Flugobjekte, sogenannte Drohnen, durchführen zu lassen. In der heutigen Warenwirtschaft besteht hier noch eine Lücke, die bisher nur unzureichend durch Lieferdienste abgedeckt wird. Alle anderen Stationen der Lieferkette von der Massenfertigung, den Massentransport per Container, Verteilung in Logistikzentren bis hin zur Bestellung per Online-Shop durch den Kunden sind bereits weitestgehend durchrationalisiert.

Die letzte Meile, also der physische Transport der Ware zum Kunden, ist hingegen weiterhin ein hoher Kostenblock der entweder durch den stationären Einzelhandel, wo der Kunde die Ware selbst abholen muss, oder durch Lieferdienste, welche die Ware zum Kunden bringen, verursacht wird. Durch den Einsatz von autonom fliegenden Lieferdrohnen verspricht man sich hier erhebliches Einsparpotenzial bei gleichzeitigem Komfort- und Zeitgewinn für den Kunden.

Dabei beschränkt sich die Art der auszuliefernden Waren keineswegs auf klassische Einzelhandelsprodukte für Endverbraucher. Auch Kuriersendungen, Essenslieferungen sowie Medikamentenlieferungen z.B. von Apotheken oder Notdienstlieferungen lassen sich auf diesem Wege ideal verteilen. Ebenso kann eine Drohne auch Ware beim Kunden abholen.

Es sind bereits vielfache Beschreibungen von Lieferdrohnen bekannt, sehr ausführlich z.B. im US Patent Nr. 20150120094. Hier werden sowohl das Fluggerät selbst, die autonome Routenführung zum Empfänger, als auch verschiedene Möglichkeiten zur sicheren Ablieferung der Ware beim Empfänger beschrieben. Ein weiteres Verfahren zur Zielanflugsteuerung einer Drohne wird in der Druckschrift DE 10 2010 051 561 A1 gezeigt.

Dabei stellen insbesondere der Zielanflug und die Warenübergabe an den Empfänger ein besonderes Problem dar. Vorgeschlagen werden Paketboxen, welche von der Drohne angeflogen und befüllt werden oder markierte sichere Landezonen, z.B. im Garten, an denen die Ware abgesetzt werden kann. Beides setzt sowohl einen geeigneten Platz beim Empfänger voraus, als auch detaillierte Ortsinformationen für einen exakten Zielanflug die weit über die heute verfügbaren Navigationsdaten auf Straßen-Ebene und Genauigkeit üblicher GPS Empfänger hinausgehen. Lieferungen in dicht bebaute Gebiete sowie zu Mehrfamilienhäusern ohne geeignete Freiflächen werden damit unmöglich. Benötigt der Empfänger die Ware womöglich an einem anderen Ort als seiner Heimadresse, nützt ihm die automatische Lieferung nach Hause wenig.

In der Anmeldung DE10 2010 051 561 wird ein Verfahren zum autonomen Zielanflug, vornehmlich für militärische Drohnen, vorgeschlagen. Hier wird von einer Bodeneinheit ein Anflugvektor ermittelt und an die Drohne gesendet, dem die Drohne folgt. Im privaten Umfeld sind entsprechende Vorrichtungen, wie z.B. Radaranlagen, jedoch nicht vorhanden. Auch ist mit dem Verfahren nicht gewährleistet, dass der ermittelte Anflugvektor sicher durchflogen werden kann.

Sicherheit ist ein kritischer Faktor bei der Auslieferung da gerade in Bodennähe immer unvorhergesehene Hindernisse der Flugbahn der Drohne in den Weg kommen können. Hier sind Haftungsfragen noch völlig ungeklärt.

Aufgabe der vorliegenden Erfindung ist es, ein Verfahren für die Zielanflugsteuerung von Lieferdrohnen zu einem Empfänger zu beschreiben, welches die oben genannten Nachteile nicht aufweist.

Das Verfahren erlaubt einen sicheren und zuverlässigen Anflug der Drohne an einen beliebigen Standort an dem sich der Empfänger befindet. An dem Standort müssen keinerlei besondere Vorrichtungen vorhanden sein, um die Lieferung entgegen zu nehmen.

Es wird im Folgenden davon ausgegangen, dass eine Lieferung immer durch den Empfänger initiiert bzw. freigegeben wird und dieser sich an der gewünschten Lieferadresse vor Ort aufhält. Das ist bei Essenslieferungen, Kurierlieferungen sowieso der Fall und auch bei normalen Warenlieferungen von Vorteil. So kann der Empfänger die Auslieferung dann anfordern, wenn es ihm am besten passt, z.B. auch außerhalb der üblichen Geschäftszeiten. Auch lässt sich der Auslieferungsort kurzfristig festlegen. Für eine Drohne stellt dies in der Regel kein Problem dar, sie kann die Ware jederzeit auf Abruf von einem lokalen Auslieferungszentrum zeitnah zum Empfänger bringen.

Vorgeschlagen wird ein Verfahren mit den folgenden Bestandteilen:
- Einer Lieferdrohne betrieben durch den Lieferanten die in der Lage ist von einem lokalen Lieferzentrum zu einem definierten Fixpunkt in Nähe des Empfängers autonom zu fliegen. Die Drohne ist mit einer mobilen Datenverbindung ausgestattet um unterwegs Steuerbefehle zu erhalten. Darüber hinaus verfügt die Drohne über eine Lichtquelle mit der sie helle codierte Lichtsignale aussenden kann, sowie über Abstandssensoren für Kollisionswarnungen im Nahbereich.
- Einem Empfänger der Ware der über ein Mobilgerät mit Display verfügt welches mit einem GPS Empfänger, einer mobilen Datenverbindung, einem elektronischen Kompass, einem Höhenwinkel-Lagesensor und einer elektronischen Kamera ausgestattet ist. Dies kann ein Smartphone, ein Tablet, eine Augmented-Reality Brille oder eine Smartwatch sein. Auch eine Kombination dieser Geräte ist denkbar. Auf dem Mobilgerät ist eine Anwendung des Lieferanten installiert die auf die oben genannten Funktionen zugreifen kann.
- Einer zentralen Recheneinheit die mit der Drohne und dem Mobilgerät des Empfängers über das eine mobile Datenverbindung in Verbindung steht. Die Recheneinheit ist in der Lage Bildanalyse durchzuführen und Steuersignale an die Drohne zu senden.

Die Abbildungen zeigen folgendes:
Figur 1:
   Der Empfänger richtet sein Mobilgerät A gen Himmel und wählt einen Ausschnitt, der frei von Hindernissen ist B. Dieser Ausschnitt wird im Kamera Preview auf dem Display C angezeigt. Hilfslinien D wie Rahmen oder ein Fadenkreuz bieten Unterstützung an. Über einen Button E wird die ausgewählte Position gespeichert (GPS Position, Kompasswinkel, Höhenwinkel) und so der Anflugkorridor F festgelegt. Das von der Drohne K ausgesendete Lichtsignal G wird von der Kamera aufgezeichnet.
Figur 2:
   Der Fixpunkt H am Himmel sowie der Anflugkorridor F werden ermittelt aus der aktuellen Position des Mobilgerätes A, dem Kompasswinkel I, dem Höhenwinkel J sowie der bekannten Flughöhe der Drohne im autonomen Flugbetrieb. Der Öffnungswinkel des Anflugkorridors F ergibt sich aus dem Öffnungswinkel der Kamera. Der Fixpunkt H liegt genau mittig im Anflugkorridor F.
Figur 3:
   Es besteht ein geschlossener Regelkreis. Die Position der Drohne K wird von der Kamera des Mobilgerätes A relativ zu dem definierten Anflugkorridor F erfasst und an die zentrale Recheneinheit L übermittelt. Dort erfolgt zum einen die Identifikation der Drohne K anhand des codierten Lichtsignales G und zum anderen die exakte Positionsbestimmung relativ zu dem definierten Anflugkorridor F. Aus den Abweichungen werden Steuerbefehle generiert welche zu der Drohne K gesendet werden. Die Drohne K korrigiert ihre Position und setzt den Anflug fort.

Das Auslieferungsverfahren läuft vorzugsweise nun wie folgt ab:
1. Der Kunde/Empfänger bestellt Ware beim Lieferanten. Die Bestellung erfolgt vorzugsweise elektronisch per App oder Web.
2. Kurz vor der vom Lieferanten geplanten oder vom Empfänger angeforderten Auslieferung wird der Empfänger aufgefordert, die auf seinem Mobilgerät installierte Anwendung des Lieferanten zu starten, sich an einen Standpunkt zu begeben von wo aus er freie Sicht schräg nach oben auf den Himmel hat und dort mit dem Kamerapreview-Bild der Anwendung eine Richtung zu definieren, aus der die Drohne sicher anfliegen kann. Die Richtung sollte insbesondere frei sein von Hindernissen wie Häusern, Bäumen, Oberlandleitungen sowie möglichen kreuzenden Fahrzeugen etc.
3. Sobald der Kunde eine geeignete Anflugrichtung gefunden hat wird auf dem Mobilgerät die GPS Position, der Kompasswinkel und der Höhenwinkel festgehalten und an den Lieferanten übermittelt.
4. Auf der Recheneinheit wird aus den übermittelten Daten sowie der Flugebene auf der die Drohne sich autonom bewegt ein Fixpunkt am Himmel berechnet, zu dem die Drohne autonom fliegen kann. Von dem Fixpunkt an wird die Drohne den Zielanflug zum Empfänger in einem aus Position des Empfängers, Kompasswinkel und Höhenwinkel definierten Anflugkorridor starten.
5. Sobald die Drohne den Fixpunkt erreicht wird der Empfänger erneut aufgefordert, den vorher bestimmte Standpunkt erneut einzunehmen und sein Mobilgerät mit der Kamera gen Himmel zu richten. Ein eingeblendeter Rahmen, Fadenkreuz oder andere Hilfslinien im Preview erlauben es ihm dabei, mit seinem Mobilgerät wieder dieselbe Ausrichtung einzunehmen die zuvor gespeichert und übermittelt wurde.
6. Sobald die Drohne den Fixpunkt erreicht erscheint sie in dem Kamerapreview Bild, welches als Lifebild/Lifestream an die Recheneinheit gesendet wird. Die Drohne beginnt mit dem Aussenden von Lichtsignalen die ebenfalls von der Kamera empfangen und übertragen werden.
7. Die Drohne beginnt nun den Zielanflug. Dabei hat der Empfänger sein Mobilgerät auf den Korridor gerichtet zu halten, wozu er vom Gerät bei Abweichungen hinsichtlich Kompasswinkel und Höhenwinkel optisch, akustisch oder haptisch alarmiert wird. Auf dem Preview eingeblendete Hilfslinien wie ein Fadenkreuz oder Rahmen unterstützen den Empfänger.
8. Die Recheneinheit erkennt das Lichtsignal der Drohne als genau das Signal, welches auch zu der Lieferung zu diesem Empfänger gehört. Sie wertet die Position der Drohne relativ zum Anflugkorridor auf dem Lifestream aus und sendet Korrekturbefehle an die Drohne.
9. Die Drohne erreicht den Empfänger und stoppt entweder per Befehl den der Empfänger von seinem Mobilgerät gesendet hat oder automatisch aufgrund eines Signals der Abstandssensoren.
10. Der Empfänger entlädt die Drohne und gibt sie für den Rückflug frei. Die Drohne fliegt denselben Korridor zurück wie sie gekommen war, bis sie wieder die Flughöhe für autonomes Fliegen erreicht hat

Mit dem beschriebenen Verfahren ergibt sich ein geschlossener Regelkreis aus der aktuellen Position der Drohne relativ zu dem vorgegebenen sicheren Anflugkorridor. Das Lifebild der Drohne wird von der Kamera des Mobilgerätes aufgezeichnet und an die zentrale Recheneinheit gesendet. Dieser wertet die Bilddaten aus und erkennt die Position der Drohne anhand der Lichtquelle relativ zu dem durch Kompass und Höhenwinkelsensor vorgegebenen Anflugkorridor. Abweichungen werden zeitnah erkannt und können korrigiert werden. Damit ist eine sichere und genaue Zielführung der Drohne auch in unbekanntem Terrain möglich.

Entfernt der Empfänger sein Mobilgerät vom Anflugkorridor oder wird der Lifestream unterbrochen wird das von den Sensoren erkannt und die Drohne kann automatisch stoppen bzw. den Anflug abbrechen.

Der geschlossene Regelkreis toleriert relativ ungenaue Vorgaben von den Sensoren im Mobilgerät. Weder GPS noch Kompass oder der Sensor für den Höhenwinkel müssen besonders genau sein, da zunächst ein breiter Anflugkorridor aufgespannt wird und während des Anfluges ständig nachkorrigiert wird. Es ist sogar denkbar Zellortung zu verwenden, wenn gerade kein GPS Signal zur Verfügung steht. Der Anflugkorridor verengt sich immer weiter je näher die Drohne zum Empfänger kommt bis sie ihn schließlich punktgenau erreicht. Zur Steigerung der Genauigkeit kann auch ein eventuell auf dem Mobilgerät vorhandener Gyroskop Sensor beitragen.

Mit der eingebauten Lichtquelle in der Drohne wird erreicht, dass eine Drohne exakt dem zugehörigen Empfänger zugeordnet werden kann. Dazu kann jede Drohne einen spezifischen Code aus Lichtsignalen aussenden. Die Erkennung eines Leuchtpunktes auf dem Kamera-Life-Stream ist deutlich einfacher als die Erkennung der Drohne selbst. Durch das Lichtsignal wird die Drohne stets zuverlässig erkannt, auch bei Dunkelheit, Regen oder schlechter Sicht. Die Drohne wird ihren autonomen Flug typischer Weise in einer Höhe von 50-200 Metern durchführen. Aus dieser Entfernung lässt sich das Lichtsignal mit üblichen Kameras in Mobilgeräten gut erkennen. Es ist denkbar, eine gebündelte Lichtquelle zu verwenden die nur in Richtung des Empfängers strahlt. Dies spart Energie und vermeidet Störungen anderer Personen.

Die Lichtquelle kann ihre Helligkeit in Abhängigkeit der Umgebungshelligkeit sowie der Entfernung zum Empfänger automatisch anpassen um stets optimale Sichtbarkeit für die Kamera des Mobilgerätes zu gewährleisten. Mit der Anpassung wird auch vermieden, dass der Empfänger oder andere Personen in seiner Nähe bei Annäherung an den Empfangsort geblendet oder belästigt werden. Die Regelungssoftware der Drohne auf der zentralen Recheneinheit kann anhand der Größe der Lichtquelle auf dem Lifestream die Entfernung der Drohne zum Empfänger ungefähr abschätzen und damit die Geschwindigkeit der Drohne bei der Zielannäherung anpassen.

Eingebaute Abstandssensoren in der Drohne vergleichbar mit Einparksensoren in PKWs bieten zusätzliche Sicherheit sollte etwas unvorhergesehenen die Flugbahn der Drohne kreuzen, die Drohne absichtlich gegen ein Hindernis gelenkt werden oder sie ihren Zielpunkt erreicht haben.

Die Rotoren der Drohne sollten mit einem Schutz versehen sein, so dass weder bei versehentlichen Kollisionen mit einem Hindernis noch bei Kontakt mit dem Empfänger Gefahr besteht.

Als weiteres Sicherheitsmerkmal kann das Lifebild des Anfluges der Drohne von der zentralen Recheneinheit aufgezeichnet werden. Absichtlich vom Empfänger herbei geführte Kollisionen lassen sich also einfach nachträglich beweisen und unvorhergesehene Zwischenfälle aufklären. Die Drohne selbst benötigt keine Kamera und erzeugt dadurch auch keine Konflikte mit der Verletzung der Privatsphäre von Personen im überflogenen Gebiet. Entfernt der Empfänger die Kamera seines Mobilgerätes soweit vom Anflugkorridor, dass die Drohne nicht mehr sichtbar ist, kann auch der Lifestream vom Mobilgerät automatisch unterbrochen werden. Somit werden keine Bilder an den Server übertragen, die die Privatsphäre anderer Personen betreffen könnten.

Ebenso kann vor Start des Zielanflugs der Anflugkorridor anhand der übermittelten Bilddaten durch ein Computerprogramm auf der zentralen Recheneinheit oder einen Mitarbeiter des Lieferanten als sicher erkannt werden und der Anflug erst dann freigegeben werden. Das Computerprogramm auf der zentralen Recheneinheit kann den Lifestream während des gesamten Zielanfluges weiter beobachten und beim Auftauchen von Fremdobjekten dem Empfänger Bescheid geben oder die Drohne stoppen.

Zusätzlich kann vor Start des Zielanfluges der übermittelte Anflugkorridor mit einem 3D Höhenmodell des betreffenden Gebietes abgeglichen werden um festzustellen, dass der Anflugkorridor nicht mit Hindernissen oder mit einem als Sperrgebiet für Drohnen markierten Luftraum kollidiert.

Kollidiert der Anflugkorridor mit einem solchen Hindernis oder Luftraum, kann dies dem Empfänger mitgeteilt werden mit der Aufforderung, einen anderen Korridor auszuwählen. Sperrgebiete und bekannte Hindernisse können dem Empfänger auch direkt vor der Auswahl des Korridors auf dem Display seines Mobilgerätes eingeblendet werden um die Auswahl eines kollidierenden Korridors von vornherein zu verhindern.

Der Empfänger kann weiterhin die Möglichkeit haben, den Anflug von seinem Mobilgerät aus zu pausieren oder abzubrechen, wenn ein sicherer Anflug nicht mehr gegeben ist. Sollte die Verbindung verloren gehen kann die Drohne selbständig stoppen und den eingeschlagenen Weg zum Fixpunkt zurückfliegen.

Es kann möglich sein, die Parameter für einen erfolgreich definierten Korridor zu speichern und für spätere Lieferungen erneut zu verwenden. Dabei sollte der Empfänger bei der erneuten Bestellung aber kurz bestätigen, dass der Korridor weiterhin frei von Hindernissen ist.

Das Verfahren ist erheblich sicherer als vollautomatische Anlieferungen, da der Empfänger notfalls eingreifen kann und den Anflug pausieren oder abbrechen kann. Andererseits wird Missbrauch durch die eingebauten Sicherheitsmechanismen wirksam unterbunden. Der Empfänger erhält selbst nie Kontrolle über die Drohne, die Steuerung wird immer von der zentralen Recheneinheit oder von der Drohne selbst vorgenommen. Der Empfänger definiert lediglich den sicheren Anflugkorridor, für den er auch haftbar gemacht werden kann. Gleichzeitig kann dem Empfänger auch die Verantwortung für das Vorliegen der notwendigen Überflugrechte im Anflugkorridor übertragen werden.

Als besonderen Vorteil ergibt sich, dass keinerlei Infrastruktur auf Seiten des Empfängers notwendig ist. Es werden keine speziellen Annahmestationen benötigt oder ausgewiesene und markierte Landezonen. Die exakten geographischen und topographischen Informationen über das Zielgebiet müssen nicht bekannt sein. Es ist sogar denkbar, Lieferungen vorzunehmen an Orte wo keine Landemöglichkeit gegeben ist, z.B. an Balkone oder Fenster von mehrgeschossigen Häusern. Die Lieferdrohne kann hierzu so gestaltet sein, dass die Entnahme der Ware von der Vorderseite der Drohne erfolgt während die Drohne vor ihm schwebt, ohne dass der Empfänger den Rotoren zu nahekommt oder sich weit vorbeugen müsste.

Weitergehend wäre es sogar denkbar, mit dem beschriebenen Verfahren Lieferungen von oder an bewegte Ziele vorzunehmen, etwa ein fahrendes Kraftfahrzeug.

Da Mobilgeräte mit den oben beschriebenen Eigenschaften mittlerweile weit verbreitet sind, kann das beschriebene Auslieferungsverfahren überall sofort eingesetzt werden. Der gesamte Vorgang des Zielanfluges dauert typischer Weise weniger als eine Minute, so dass auch hier vom Empfänger kein großer Aufwand nötig ist. Insgesamt ist die Zustellung direkt in die Hände des Empfängers deutlich sicherer, flexibler und vor allem komfortabler als die Zustellung an eine Paketbox oder einen anderen definierten Annahmeort.

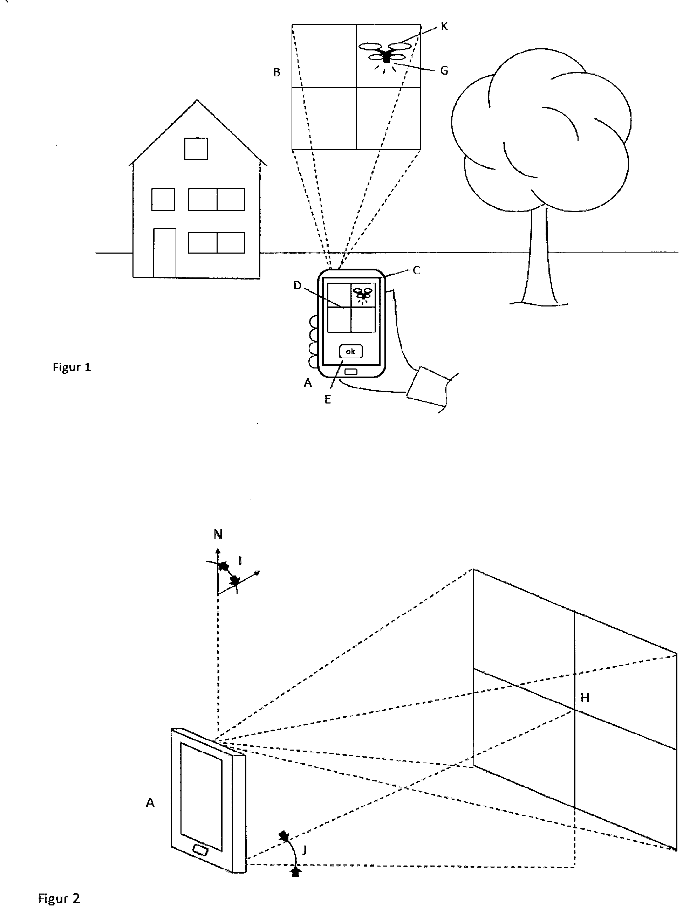

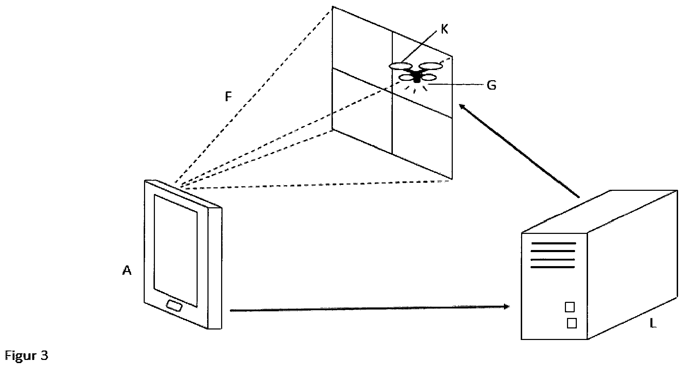

## Patentansprüche

1. Verfahren zur Zielanflugsteuerung von unbemannten Flugobjekten, vorzugsweise Drohnen (K) mit der Fähigkeit zum Warentransport, ausgestattet mit einer mobilen Datenverbindung um Steuerbefehle ; von einer zentralen Recheneinheit zu empfangen, an einen Empfänger welcher über ein Mobilgerät (A) mit einer mobilen Datenverbindung, einem Display (C), zumindest einer auf der dem Display (C) gegenüberliegenden Seite angeordneten Kamera, sowie über Sensoren zur Positionsbestimmung, zur Bestimmung des Kompasswinkels (I) und des Höhenwinkels (J) verfügt, **gekennzeichnet durch** die folgenden Schritte:
- Bestimmen eines sicheren Anflugkorridors (F) indem der Empfänger mit dem auf dem Display (C) angezeigten Preview Bild der Kamera seines Mobilgerätes (A) einen Bereich (B) am Himmel auswählt auf den aus seiner Position freie Sicht besteht und festhalten von Position, dem Kompasswinkel (I) und dem Höhenwinkel (J) für diese Ausrichtung.
- Ermitteln eines Fixpunktes (H) am Himmel auf der zentralen Recheneinheit, von dem der Zielanflug begonnen wird, aus dem Schnittpunkt einer gedachten Linie mittig des sicheren Anflugkorridors (F) und der Flugfläche der Drohne (K).
- Autonomes Anfliegen des Fixpunktes (H) durch die Drohne (K).
- Aussenden von Lichtsignalen durch die Drohne (K) mittels einer an der Drohne vorhandenen Lichtquelle (G) während des Zielanfluges.
- Empfangen der Lichtsignale während des Zielanfluges der Drohne (K) mit der Kamera des Mobilgerätes (A) und erfassen der aktuellen Position der Drohne relativ zur Ausrichtung des Mobilgerätes (A).
- In der zentralen Recheneinheit vergleichen der erfassten aktuellen Position der Drohne (K) mit dem zuvor bestimmten raumfesten sicheren Anflugkorridor (F) und errechnen von Steuersignalen zur Korrektur der Drohnenposition aus den Abweichungen.
- Senden der Steuersignale von der zentralen Recheneinheit an die Drohne (K), wodurch sich während des Zielanfluges ein geschlossener Regelkreis ergibt.

2. Verfahren nach Anspruch 1, **dadurch gekennzeichnet, dass** das Mobilgerät (A) dem Empfänger optische, akustische oder haptische Hinweise gibt, wenn er die Kamera des Mobilgerätes (A) währende des Zielanfluges vom sicheren Anflugkorridor (F) abwendet.

3. Verfahren nach einem der vorhergehenden Ansprüche, **dadurch gekennzeichnet, dass** das von der Kamera empfangene Lichtsignal der Drohne (K) sowie die Daten des sicheren Anflugkorridors (F) als Lifestream an die zentrale Recheneinheit (L) gesendet werden und dort gespeichert werden können.

4. Verfahren nach einem der vorhergehenden Ansprüche, **dadurch gekennzeichnet** das die Drohne (K) den Zielanflug pausiert oder abbricht wenn die mobile Datenverbindung unterbrochen wurde oder keine Steuersignale mehr empfangen werden.

5. Verfahren nach einem der vorhergehenden Ansprüche **dadurch gekennzeichnet, dass** der Empfänger von seinem Mobilgerät (A) aus den Zielanflug der Drohne (K) pausieren oder abbrechen kann.

6. Verfahren nach einem der vorhergehenden Ansprüche, **dadurch gekennzeichnet, dass** das Lichtsignal der Drohne (K) codiert ist und die Codesequenz zur eindeutigen Identifizierung der Drohne (K) dienen kann.

7. Verfahren nach einen der vorhergehenden Ansprüche, **dadurch gekennzeichnet, dass** es sich bei dem Lichtsignal um einen gebündelten Lichtstrahl handelt, der nur in Richtung des Empfängers ausgesendet wird und dessen Helligkeit sich automatisch in Abhängigkeit von der Umgebungshelligkeit und der Entfernung zum Empfänger anpasst.

8. Verfahren nach einem der vorhergehenden Ansprüche, **dadurch gekennzeichnet, dass** die Drohne (K) den Rückflug vom Empfänger zum Fixpunkt (H) am Himmel selbstständig durchführt.

## Claims

1. Method for controlling the target approach of unmanned flying objects, chiefly drones (K) that are capable of transporting goods, equipped with a mobile data link to receive control commands from a central processing unit (L), to a receiver which has a mobile device (A) with a mobile data link, a display (C), at least one camera arranged on the opposite side of the display (C), and also have sensors to determine position, to determine the compass direction (I) and angle of elevation (J), **characterised by** the following steps:
- Determine a safe approach corridor (F) by having the receiver use the preview picture that is shown on the display (C) from the camera of his mobile device (A) to select a section (B) of the sky in which, from his position, the view is clear, and retain position, compass direction (I) and angle of elevation (J) for this orientation.
- Find a fixed point (H) in the sky on the central processing unit (L) from which the target approach will commence, from the intersection of an imaginary line centred in the safe approach corridor (F) and the flight level of the drone (K).
- Autonomous approach of the fixed point (H) by the drone (K).
- Light signals emitted by the drone (K) by means of a light source (G) on the drone during the target approach.
- During the target approach of the drone (K) receive the light signals with the camera of the mobile device (A) and register the current position of the drone relative to the orientation of the mobile device (A).
- Compare in the central processing unit (L) the registered current position of the drone (K) with the previously determined fixed safe approach corridor (F) and compute control signals to correct the drone position out of any deviations.
- Transmit the control signals from the central processing unit (L) to the drone (K), through the process of which a closed control loop is produced during the target approach.

2. Method according to claim 1, **characterised by** the fact that the mobile device (A) supplies the receiver with visual, acoustic or tactile signals when the receiver turns the camera of the mobile device (A) away from the safe approach corridor (F) during the target approach.

3. Method according to one of the previous claims, **characterised by** the fact that the light signal of the drone (K) received by the camera as well as the data of the safe approach corridor (F) are transmitted as live-stream to the central processing unit (L) and can be saved there.

4. Method according to one of the previous claims, **characterised by** the fact that the drone (K) pauses or breaks off the target approach if the mobile data link has been interrupted or no control signals are received any more.

5. Method according to one of the previous claims, **characterised by** the fact that the receiver can use his mobile device (A) to pause or break off the target approach of the drone (K).

6. Method according to one of the previous claims, **characterised by** the fact that the light signal of the drone (K) is coded and the code sequence can serve to uniquely identify the drone (K).

7. Method according to one of the previous claims, **characterised by** the fact that the light signal is a focused light beam, which is only transmitted in the direction of the receiver, and whose brightness adapts automatically dependent on the brightness of the surroundings and the distance to the receiver.

8. Method according to one of the previous claims, **characterised by** the fact that the drone (K) undertakes the return flight from the receiver to the fixed point (H) in the sky autonomously.

## Revendications

1. Processus pour le pilotage du vol d'approche d'objets volants sans occupants, de préférence des drones (K) ayant la capacité de transporter des marchandises, équipés avec une liaison de données mobile pour recevoir des ordres de pilotage d'un calculateur central (L), à un destinataire disposant d'un appareil mobile (A) avec une liaison de données mobile, un écran (C), au moins une caméra disposée sur le côté opposé à l'écran (C), ainsi que de capteurs de détermination de la position, pour déterminer l'angle de compas (I) et l'angle de hauteur (J), **caractérisé par** les étapes suivantes :
- Détermination d'un couloir d'approche sûr (F) en ce que le destinataire sélectionne, avec la Preview affichée sur l'écran (C) de la caméra de son appareil mobile (A), une zone (B) dans le ciel sur laquelle il a une vue dégagée de sa position, et maintien de la position de l'angle de compas (I) et de l'angle de hauteur (J) pour cette orientation.
- Détermination d'un point fixe (H) dans le ciel sur le calculateur central (L), d'où le vol d'approche est débuté, à partir du point d'intersection d'une ligne au milieu du couloir d'approche de sécurité (F) et du niveau de vol du drone (K).
- Passage au point fixe (H) en autonomie par le drone (K).
- Émission de signaux lumineux par le drone (K) à l'aide d'une source lumineuse (G) présente sur le drone pendant le vol d'approche
- Réception des signaux lumineux pendant le vol d'approche du drone (K) avec la caméra de l'appareil mobile (A) et enregistrement de la position actuelle du drone par rapport à l'orientation de l'appareil mobile (A).
- Comparaison dans le calculateur central (L) de la position actuelle enregistrée du drone (K) avec le couloir d'approche (F) sûr, déterminé et fixe dans l'espace et calcul de signaux de pilotage pour corriger la position du drone à partir des écarts.
- Envoi de signaux de pilotage du calculateur central (L) au drone (K), ce qui produit un circuit logique fermé pendant le vol d'approche.

2. Processus selon la revendication 1, **caractérisé en ce que** l'appareil mobile (A) donne des consignes visuelles, acoustiques ou haptiques au destinataire si la caméra de l'appareil mobile (A) dévie du couloir d'approche sûr (F) pendant le vol d'approche.

3. Processus selon l'une des revendications précédentes, **caractérisé en ce que** le signal lumineux du drone (K) reçu par la caméra ainsi que les données du couloir d'approche sûr (F) peuvent être envoyés comme Lifestream au calculateur central (L) et y être enregistrés.

4. Processus selon l'une des revendications précédentes, **caractérisé en ce que** le drone (K) fait une pause ou interrompt le vol d'approche si la liaison de données mobile a été interrompue ou si aucun autre signal lumineux n'est reçu.

5. Processus selon l'une des revendications précédentes, **caractérisé en ce que** le destinataire peut mettre en pause ou interrompre le vol d'approche du drone (K) à partir de son appareil mobile (A).

6. Processus selon l'une des revendications précédentes, **caractérisé en ce que** le signal lumineux du drone (K) est codé et que la séquence de code sert à l'identification univoque du drone (K).

7. Processus selon l'une des revendications précédentes, **caractérisé en ce que** le signal lumineux est un rayon lumineux focalisé émis uniquement en direction du destinataire, et dont la luminosité s'adapte automatiquement à la luminosité environnante et à la distance jusqu'au destinataire.

8. Processus selon l'une des revendications précédentes, **caractérisé en ce que** le drone (K) effectue le vol retour en autonomie du destinataire jusqu'au point fixe (H) dans le ciel.
